# EUROPEAN PATENT APPLICATION

(11) **EP 4 716 064 A1**
(43) Date of publication of application: **25.03.2026**
(21) Application number: 24315434.1
(22) Date of filing: 23.09.2024
(51) Int. Cl.: H02J 13/00

(54) **SYSTEM FOR THE MANAGEMENT OF THE CONNECTION OF AN EQUIPMENT TO AN ELECTRICAL INSTALLATION**

(71) Applicant: HAGER-ELECTRO SAS, 67210 Obernai (FR)
(72) Inventor: Baumann, Eric, 67610 LA WANTZENAU (FR); Helfter, Marc, 67114 ESCHAU (FR); Duvernelle, Christophe, 67500 HAGUENAU (FR); Wilhelm Dillier, Teddy, 67000 STRASBOURG (FR); Bienert, Florian, 67290 LOHR (FR); Reiner, Ulrich, 67691 HOCHSPEYER (DE); Raubuch, Sebastian, 66663 MERZIG (DE); Burkhart, Jan, 66440 BLIESKASTEL (DE); Klag, Johannes, 66440 BLIESKASTEL (DE); Weinard, Christian, 66740 SAARLOUIS (DE); Hoffmann, Axel, 57200 SARREGUEMINES (FR); Debree, Alexander, 66539 NEUNKIRCHEN (DE)
(74) Representative: Ipsilon

(57) **Abstract**

System for the management of the connection of an equipment to an electrical installation

The invention concerns a system for the management of the connection of an equipment (3) to an electrical installation (2), characterized in that the system comprises:
- a terminal (1) connected to the electrical installation (2) comprising :
- a detection device (12),
- a communication interface (14) with a remote unit (4),
- a socket (13) to be plugged by the equipment (3) comprising pins (131) for electrical energy flow, and a communication pin (132) linked with the detection device (12),

- an equipment (3) having a complementary plug (31),
- a remote unit (4) connected to the terminal (1) with data relative to an allowed equipment (3),
- an equipment identification device (32) embedded in the plug (31) of the equipment (3) and comprising a data provider configured to be activated by a signal from the terminal (1) through the communication pin (132).

## Description

The present invention relates to the field of the connection of an equipment to an electrical installation and more particularly to the field of a system arranged to operate a management of such a connection of an equipment.

The installation of some particular electrical equipment or components like electric energy generating devices, for example solar panels, private water turbines or wind turbines, or like an equipment operating with high voltage, in a house, an apartment or any building needs to be operated by specialized technicians. Indeed, the newly installed equipment or components may have some particular features that may not be technically compatible with the existing electrical installation or with some equipment previously installed on the electrical installation and may risk harming some part of the electrical installation and its already installed equipment. Thus, the installation of a new equipment by specialized technicians participates to the verification of its compatibility and the confirmation that the newly installed equipment or component is certified to be connected to the electrical installation. However, the imperative to involve skilled technicians, potentially specialists of the installed equipment, limits the possibilities for the final customer or the inhabitant of the building to operate this installation by himself.

The present invention aims to overcome these drawbacks of the prior art by proposing a solution based on a system able to verify and certify the compatibility of an equipment or component newly installed to an electrical installation before allowing its operation while being an easy-to-use system for a person without technical skills.

The invention thus aims a system for the management of the connection of an equipment to an electrical installation, characterized in that the system comprises:
- a terminal connected to the electrical installation through the electricity meter and/or the distribution board of the electrical installation, this terminal comprising:
   - at least one detection device,
   - a communication interface with at least one remote unit,
   - a socket arranged to be plugged by the equipment, this socket comprising pins linked to at least a neutral line, a ground wire and at least one phase line, and a communication pin linked with the at least one detection device,
- an equipment to be connected to the electrical installation, this equipment comprising a plug with pins complementary to the socket pins of the terminal,
- at least one remote unit comprising a memory means with data relative to at least one equipment allowed to be connected to an electrical installation, this remote unit being connected to the communication interface of the terminal,
- an equipment identification device embedded in the plug of the equipment to cooperate with the detection device of the terminal through at least the communication pin of the socket, this equipment identification device comprising at least a data provider of selected data relative to at least one part of the equipment, this data provider being configured to be activated by a signal from the terminal.

The invention further concerns an implementation method for the system according to the invention, characterized in that, following the plugging of the equipment on the socket of the terminal, the method comprises:
- a step of providing at least one signal from the detection device of the terminal to the equipment identification device of the plug,
- a step of providing a data from the equipment identification device to the detection device of the terminal,
- a step of identifying the equipment plugged on the socket of the terminal,
- a step of transmitting the equipment identification result to the at least one remote unit,
- a step of supplying electrical energy to the plug of the equipment.

The invention will be better understood, thanks to the following description, which relates to preferred embodiments, given as a non-limiting example, and explained with reference to the attached schematic drawings, in which:

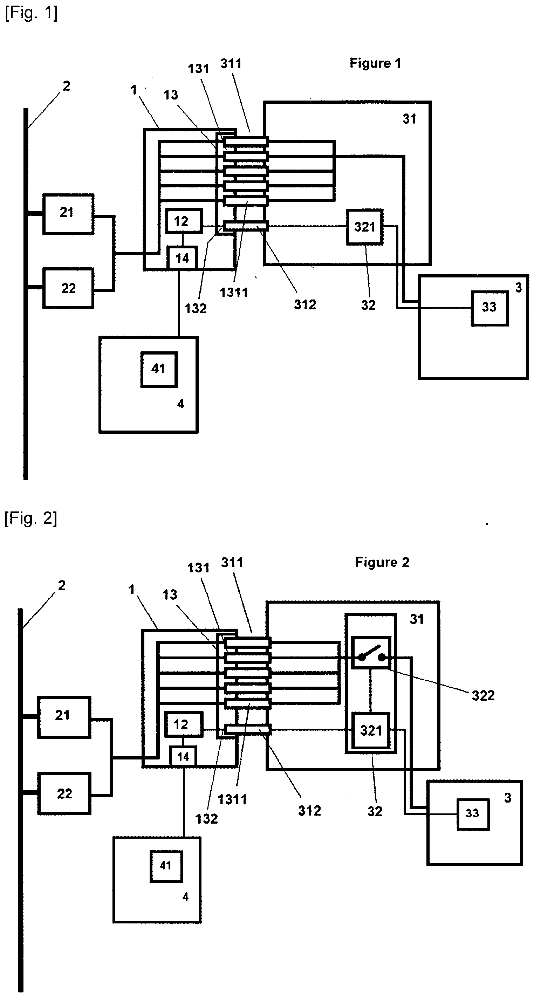

[Fig. 1] represents a schematic illustration of a first example of an arrangement of the system of the invention,
[Fig. 2] represents a schematic illustration of a second example of an arrangement of the system of the invention,

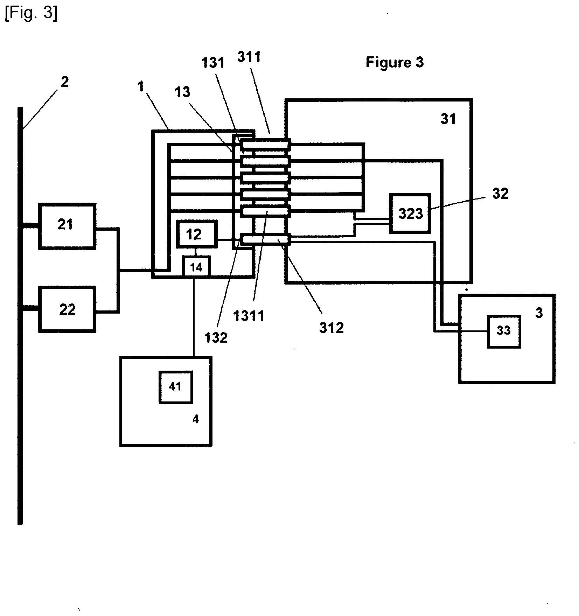

[Fig. 3] represents a schematic illustration of a third example of an arrangement of the system of the invention.

The invention concerns a system for the management of the connection of an equipment 3 to an electrical installation 2, characterized in that the system comprises:
- a terminal 1 connected to the electrical installation 2 through the electricity meter 21 and/or the distribution board 22 of the electrical installation 2, this terminal 1 comprising :
   - at least one detection device 12,
   - a communication interface 14 with at least one remote unit 4,
   - a socket 13 arranged to be plugged by the equipment 3, this socket 13 comprising pins 131 linked to at least a neutral line, a ground wire 1311 and at least one phase line, and a communication pin 132 linked with the at least one detection device 12,
- an equipment 3 to be connected to the electrical installation 2, this equipment comprising a plug 31 with pins 311, 312 complementary to the socket pins 131, 132 of the terminal 1,
- at least one remote unit 4 comprising a memory means 41 with data relative to at least one equipment 3 allowed to be connected to an electrical installation 2, this remote unit 4 being connected to the communication interface 14 of the terminal 1,
- an equipment identification device 32 embedded in the plug 31 of the equipment 3 to cooperate with the detection device 12 of the terminal 1 through at least the communication pin 132 of the socket 13, this equipment identification device 32 comprising at least a data provider of selected data relative to at least one part of the equipment 3, this data provider being configured to be activated by a signal from the terminal 1.

The system of the invention is arranged to operate a remote control of the equipment 3 newly connected to the electrical installation 2 before its supply with electrical energy. The equipment 3 to be connected to the electrical installation 2 is plugged to the socket 13 of the terminal 1 so that this terminal 1 operates as an interface between the electrical installation 2 and the equipment 3 managing the electrical energy supply to the equipment 3. The terminal 1 is arranged to operate a communication with the plugged equipment 3 so that the terminal 1 is able to retrieve or receive relevant data relative to at least one particular feature of the plugged equipment 3 and identify the plugged equipment 3. At the same time, this terminal 1 is connected to a remote unit 4 to exchange data with this remote unit 4 through a dedicated communication interface 14 and operate a control of the identified equipment 3 on the basis of data stored in a memory means 41 of this remote unit 4. Preferably, the data stored in the memory means 41 of this remote unit 4 comprises the matches between equipment identification data and equipment allowed to be connected to the electrical installation 2 so that the equipment 3 without having an identification stored is not certified to be connected and an additional verification according to another data might be operated to get a certification. Alternatively, and/or complementary, the data stored in the memory means 41 of this remote unit 4 comprises the matches between equipment identification data and equipment 3 not compatible with the electrical installation 2 or not allowed to be connected to the electrical installation 2 so that the plugged equipment 3 becomes identified as not authorized to be connected. Such a remote control of the equipment identification data retrieved and/or identified by the terminal 1 and its corresponding positive feedback from the remote unit 4 provides a certification of the plugged equipment 3 so that the equipment 3 may be connected to the electrical installation 2 and supplied with electrical energy by the terminal 1.

In the system of the invention, the terminal 1 is arranged to communicate with the plugged equipment 3 to be controlled, through the plug 311 socket 13 interface. The plug 31 and the socket 13 are connected through several complementary respective pins 131, 132, 311, 312 so that several pins 131, 311 are dedicated to the transmission of electrical flow and at least one pair of complementary pins 132, 312 is dedicated to the communication for the transmission of data. The retrieving and/or the reception of data from the plugged equipment 3 is operated at least through these communication pins 132, 312. These operations are mainly carried out by the detection device 12 of the terminal 1 in cooperation with the equipment identification device 32 embedded in the plug 31 of the equipment 3. According to the system of the invention, the equipment identification device 32 of the plug 31 comprises at least one data provider arranged to release at least one data to the terminal 1 under the effect of a signal emitted by the terminal 1. Additionally, the data provider may be arranged to retrieve at least one data or kind of data among one or several databases of the equipment 3.

It must be noted that, in the present document, the selected data released by the data provider may correspond to at least one data stored or registered in one or several memory means of the equipment 3 or to at least one technical value of at least one part of the equipment 3 retrieved and identified thanks to a signal emitted by the terminal 1.

The socket 13 and the plug 31 are mentioned as comprising pins 131, 311 linked to at least a neutral line, a ground wire 1311 and at least one phase line. However, it should be noted that, depending on the type of electrical flow passing through the socket 13 and the plug 31 and the number of phase lines needed for the flow of electrical energy, some additional pins dedicated to the flow of electrical energy may be integrated in the socket 13 and in the complementary plug 31.

According to an example relative to a variant of the system of the invention, the communication pin 312 is connected to a controller 321 of the equipment identification device 32 embedded in the plug 31, this controller 321 being a part of the equipment identification device 32 of the plug 31. This controller 31 is arranged to receive and transmit data with the terminal 1 through the communication pin 312 and to be activated under the reception of a signal from the terminal 1 through this communication pin 312. Into the plug 31, the controller 321 is arranged to operate the verification of at least one data of the equipment 3. This verification step may be carried out by the retrieving of particular data in at least one memory means of the equipment 3 through a communication interface between the controller 321 and at least one part of the equipment 3. Alternatively, the verification step carried out by the controller 321 may be operated by the checking of at least one data or at least one performance of at least one element of the equipment 3, or more particularly at least one element of the plug 31. This checking of a performance may be operated by the functioning of this controlled element with respect to at least one value used as a predefined threshold. This checking may be operated continuously or alternatively at predefined regular intervals. For example, the controller 321 is arranged to verify at least one feature of the elements managing the safety transmission of the electrical energy supply passing through the plug 31 of the equipment 3. The controller 321 transmitting data, for example data corresponding to the results of its verification, to the terminal 1 and more particularly to the detection device 12 of the terminal 1, the controller 321 operates as a data provider of the equipment identification device 32 embedded in the plug 31.

According to an example relative to another variant of the system of the invention which may be combined with the previous detailed variants of the system, the equipment identification device 32 further comprises a switch mechanism 322 controlling the electrical power supply through the plug 31, this switch mechanism 322 being actuated by the controller 321. This switch mechanism 322 is positioned on the electrical energy supply line of the plug 31 so that the mechanism 322 is able to stop the electricity supply of the equipment 3 through the plug 31. This switch mechanism 322 is connected to the controller 321 so that the controller 321 is able to retrieve specific data relative to this switch mechanism 322 and transmit this retrieved data to the terminal 1. These transmitted data relative to the switch mechanism 322 embedded in the plug 31 of the equipment 3 are provided to the detection device 12 of the terminal 1 so that an identification and a control of some features of the plugged equipment 3 are able to be operated by the terminal 1 in cooperation with the remote unit 4. Further, thanks to the connection of the switch mechanism 322 to the controller 321, this mechanism may be actuated by the controller 321. Thus, in the event the verification by the controller 321 of at least one feature of the electrical energy passing through the plug 31, identifies one or several threshold overruns, the controller 321 is able to trigger the switch mechanism 322 and stop the electric flow.

According to an example relative to another variant of the system of the invention which may be combined with the previously detailed variants of the system, the switch mechanism 322 of the activated protection control device 32 is made by a circuit breaker. Such a circuit breaker being positioned on the electrical energy supply line of the plug 31, is arranged to operate a control of the electrical flow by itself and is able to be triggered in the event of electrical supply with overcurrent. The use of a circuit breaker as a switch mechanism 322 provides an additional way to stop the electrical flow passing through the plug 31. Indeed, the electrical flow through the plug 31 can be stopped by the circuit breaker triggered by itself or under the actuation of the controller 322. Depending on the particular technical features of the type of circuit breaker used as switch mechanism 322, the switch mechanism 322 may benefit from the advantages and properties provided by the use of such a type of circuit breaker. Thus, this circuit breaker may be a Miniature Circuit Breaker known as MCB or a Residual Current Device known as RCD and similar devices.

According to an example relative to another variant of the system of the invention which may be combined with the previously detailed variants of the system, the switch mechanism 322 is in communication with a device positioned outside the equipment 3. This communication of the switch mechanism 322 with an external device allows the transmission of information or data relative to its own technical features or eventually relative to the conditions for the triggering of one stop of the electrical flow through the plug 31 so that an analysis of these transmitted data relative to the status of the equipment 3 may be operated. Depending on the arrangement of the system of the invention, this external device may be the terminal 1 or the remote unit 4 or eventually a grid operator. This external device may also be a device embedded or connected to the terminal 1, to the remote unit 4 or eventually to the grid operator. The communication between the controller 321 and this external device might pass through the electrical installation 2 and so through the communication pin 132 of the plug 31 / socket 13 interface and the terminal 1 as the terminal 1 is an interface between the plug 31 and the electrical installation 2. According to an alternative arrangement, the communication between the switch mechanism 322 and this external device is operated through a remote communication device connected to the switch mechanism 322 and embedded in the plug 31 of the equipment 3.

According to an example relative to another variant of the system of the invention which may be combined with the previously detailed variants of the system, the equipment identification device 32 comprises a resistor 323 as a data provider, this resistor 323 being connected between the communication pin 132 and the ground wire pin 1311 of the plug 31 of the equipment 3 so that the resistance of the resistor 323 may be retrieved by the terminal 1 by either applying a predetermined voltage on both ends of the resistor 323 and by measuring the current flow through the resistor 323 or by applying a predetermined current through the resistor 323 and by measuring the voltage drop over the resistor 323. Such an arrangement provides a construction of the equipment identification device 32 in the plug 31 wherein some data relative to the resistor 323 may be automatically retrieved and identified by the terminal 1 with the emission by the terminal 1 of an electrical signal transmitted through the ground wire pin 1311 of the plug 31 in the form of a voltage difference applied on both ends of the resistor 323 or in the form of a predetermined current through the resistor 323. The passage of this electrical signal through the resistor 323 provides a passive reaction of the resistor 323 that allows the terminal 1 to identify the resistance of the equipment identification device 32. Indeed, following the application of a predetermined voltage between the communication pin 132 and the ground wire pin 1311, the terminal 1 may identify the equipment 3 by measuring the current flow through the resistor 323. Alternatively, the terminal 1 may identify the resistance of the equipment identification device 32 by applying a predetermined current between the communication pin 132 and the ground wire pin 1311 and by measuring the resulting voltage drop over the resistor 323. The resistor 323 has a predetermined resistance value that carries the information allowing to identify the equipment 3. The measured current flow or voltage drop, when a predetermined voltage or current is applied, is indicative of the resistance value of the resistor 323. Hence, the nature of the equipment 3 connected to the electrical installation 2 can be deduced from the measured current flow or voltage drop. Thus, considering the reaction of the resistor 323 identified from the communication pin 132, the terminal 1 is able to determine at least one data relative to the resistance of this resistor 323 in the connected plug 31 of the equipment 3 to the socket 13 of the terminal 1.

According to examples relative to particular arrangements of the previous variant of the system, the equipment identification device may be embedded in the controller 321. In that case, information allowing to identify the equipment is conveyed from the controller 321 through the communication pin 132 to the detection device 12 of the terminal 1.

According to an example relative to another variant of the system of the invention which may be combined with the previous detailed variants of the system, the system further comprises a database 15 in connection with the terminal 1, this database 15 comprising matches between, on one side, identified resistances and, on the other side, features or specifications of equipment 3 allowing the identification of the plugged equipment by the terminal 1. The memory means wherein this database 15 is stored may be embedded in the terminal itself so that the memory means of this database 15 may be connected to the at least one detection device 12 of the terminal 1. However, depending on the arrangement of the system, this database 15 may be located in a remote device in connection with the terminal 1 and/or the detection device 12 of the terminal 1. For example, this remote device may be the remote unit 4 of the system. Considering such example, this database 15 may be a database of the memory means 41 in the remote unit 4 with data relative to at least one equipment 3 allowed to be connected to an electrical installation 2 or may be combined or stored with this database in the same memory means 41 of the remote unit 4.

Considering such database 15 in connection with the terminal 1, following the identification of the measured resistance of the resistor 323 of the equipment identification device 32, the terminal 1 and/or the detection device 12 is able to retrieve at least one feature or specification of the equipment 3 matching with the identified resistance.

According to an example relative to another variant of the system of the invention which may be combined with the previously detailed variants of the system, at least one data of the selected data provided by the equipment 3 is from a database in a memory means 33 of the equipment 3. This memory means 33 is embedded in a part of the equipment 3 remote from the plug 31. This memory means 33 is connected, directly or indirectly, to the equipment identification device 32 and preferably to the data provider of the equipment identification device 32 of the plug 31 so that the data provider is able to retrieve and identity at least one data stored in the memory means 33 of the equipment 3 and transmit this data to the terminal 1 and more particularly to the detection device 12 of the terminal 1.

According to an example relative to another variant of the system of the invention which may be combined with the previously detailed variants of the system, at least one data of the selected data provided by the equipment 3 is relative to the kind of equipment 3 and/or technical specifications of the equipment 3 plugged on the socket 13 of the terminal 1. These technical specifications may refer to a series number of the equipment 3 or a series number of at least one of the parts of the equipment 3 or a data relative to at least one functioning ability of the equipment 3, eventually in case of particular or predefined conditions.

Additionally, the invention concerns an implementation method for the system according to the invention, characterized in that, following the plugging of the equipment 3 on the socket 13 of the terminal 1, the method comprises:
- a step of providing at least one signal from the detection device 12 of the terminal 1 to the equipment identification device 32 of the plug 31,
- a step of providing a data from the equipment identification device 32 to the detection device 12 of the terminal 1,
- a step of identifying the equipment 3 plugged on the socket 13 of the terminal 1,
- a step of transmitting the equipment 3 identification result to the at least one remote unit 4,
- a step of supplying electrical energy to the plug 31 of the equipment 3.

According to an example relative to another variant of the system of the invention which may be combined with the previous detailed variants of the system, the method further comprises, previously to the supplying of electrical energy:
- a step of certificate verification of the equipment 3 plugged to the terminal 1 by the remote unit 4,
- a step of transmitting the verification result to the terminal 1.

The certificate verification of the equipment 3 is operated thanks to at least one database stored in the memory means 41 of the remote unit 4 of the system. This database comprises the matches between some equipment identification data and equipment allowed to be connected to the electrical installation 2. Thus, an equipment identification data retrieved or identified by the terminal 1 is transmitted to the remote unit 4 so that the verification of its allowance to be connected to the electrical installation is operated. If the result of this verification is positive, the certification is verified and the remote unit 4 confirms the certification to the terminal. On the contrary, if the certification is not verified, the connection of the plugged equipment 3 is not allowed.

According to an example relative to another variant of the system of the invention which may be combined with at least one of the previously detailed variants of the system, the signal from the detection device 12 of the terminal 1 is at least one electrical impulse so that a voltage is applied on both ends of the resistor 323 embedded in the plug 31 and the data retrieved by the terminal 1 corresponds to the measured resistance of the equipment identification device 32 comprising the resistor 323.

According to an example relative to another variant of the system of the invention which may be combined with the previous detailed variants of the system, based on the measured resistance, the terminal 1 retrieves at least one data relative to the plugged equipment 3 in a database 15.

According to an example relative to another variant of the system of the invention which may be combined with at least one of the previously detailed variants of the system, the detection device 12 of the terminal 1 provides at least two different signals to the equipment identification device 32 so that the equipment identification device 32 provides two different data relative to the plugged equipment 3. On the basis of these two different data, the terminal 1 is able to operate a cross-analysis in cooperation with two databases or with a double entry database to identify the plugged equipment 3.

Of course, the invention is not limited to the embodiments described and shown in the attached drawings. Modifications remain possible, in particular from the point of view of the constitution of the various elements or by substitution of technical equivalents, without departing from the scope of protection of the invention.

## Claims

1. System for the management of the connection of an equipment (3) to an electrical installation (2), **characterized in that** the system comprises:
- a terminal (1) connected to the electrical installation (2) through the electricity meter (21) and/or the distribution board (22) of the electrical installation (2), this terminal (1) comprising:
- at least one detection device (12),
- a communication interface (14) with at least one remote unit (4),
- a socket (13) arranged to be plugged by the equipment (3), this socket (13) comprising pins (131) linked to at least a neutral line, a ground wire (1311) and at least one phase line, and a communication pin (132) linked with the at least one detection device (12),
- an equipment (3) to be connected to the electrical installation (2), this equipment comprising a plug (31) with pins (311, 312) complementary to the socket pins (131, 132) of the terminal (1), .
- at least one remote unit (4) comprising a memory means (41) with data relative to at least one equipment (3) allowed to be connected to an electrical installation (2), this remote unit (4) being connected to the communication interface (14) of the terminal (1),
- an equipment identification device (32) embedded in the plug (31) of the equipment (3) to cooperate with the detection device (12) of the terminal (1) through at least the communication pin (132) of the socket (13), this equipment identification device (32) comprising at least a data provider of selected data relative to at least one part of the equipment, this data provider being configured to be activated by a signal from the terminal (1).

2. System according to claim 1, **characterized in that** the communication pin (312) is connected to a controller (321) of the equipment identification device (32) embedded in the plug (31).

3. System according to claim 2, **characterized in that** the equipment identification device (32) further comprises a switch mechanism (322) controlling the electrical power supply through the plug (31), this switch mechanism (322) being actuated by the controller (321).

4. System according to claim 3, **characterized in that** the switch mechanism (322) of the activated protection control device is made by a circuit breaker.

5. System according to any of the claims 3 or 4, **characterized in that** the switch mechanism (322) is in communication with a device positioned outside the equipment (3).

6. System according to any of the previous claims, **characterized in that** the equipment identification device (32) comprises a resistor (323) as data provider, this resistor (323) being connected between the communication pin (132) and the ground wire pin (1311) of the plug (31) of the equipment (3) so that the resistance of the resistor (323) may be retrieved by the terminal (1) by either applying a predetermined voltage on both ends of the resistor (323) and by measuring the current flow through the resistor (323) or by applying a predetermined current through the resistor (323) and by measuring the voltage drop over the resistor (323).

7. System according to claim 6, **characterized in that** the system further comprises a database (15) in connection with the terminal (1), this database (15) comprising matches between, on one side, identified resistances and, on the other side, features or specifications of equipment (3) allowing the identification of the plugged equipment by the terminal (1).

8. System according to any of the previous claims, **characterized in that** at least one data of the selected data provided by the equipment (3) is from a database in a memory means (33) of the equipment (3).

9. System according to any of the previous claims, **characterized in that** at least one data of the selected data provided by the equipment (3) is relative to the kind of equipment (3) and/or technical specifications of the equipment (3) plugged on the socket (13) of the terminal (1).

10. Implementation method for the system according to claims 1 to 9, **characterized in that**, following the plugging of the equipment (3) on the socket (13) of the terminal (1), the method comprises:
- a step of providing at least one signal from the detection device (12) of the terminal (1) to the equipment identification device (32) of the plug (31),
- a step of providing a data from the equipment identification device (32) to the detection device (12) of the terminal (1),
- a step of identifying the equipment (3) plugged on the socket (13) of the terminal (1),
- a step of transmitting the equipment (3) identification result to the at least one remote unit (4),
- a step of supplying electrical energy to the plug (31) of the equipment (3).

11. Implementation method according to claim 10, **characterized in that** the method further comprises, previously to the supplying of electrical energy:
- a step of certificate verification of the equipment (3) plugged to the terminal (1) by the remote unit (4),
- a step of transmitting the verification result to the terminal (1).

12. lmplementation method according to claim 10 or 11 for a system according to claim 7, **characterized in that** the signal from the detection device (12) of the terminal (1) is at least one electrical impulse so that a voltage is applied on both ends of the resistor (323) embedded in the plug (31) and the data retrieved by the terminal (1) correspond to the measured resistance of the equipment identification device (32) comprising the resistor (323).

13. lmplementation method according to claim 12 for a system according to claim 8, **characterized in that**, based on the measured resistance, the terminal (1) retrieves at least one data relative to the plugged equipment (3) in a database (15).

14. lmplementation method according to claims 10 to 13, **characterized in that** the detection device (12) of the terminal (1) provides at least two different signals to the equipment identification device (32) so that the equipment identification device (32) provides two different data relative to the plugged equipment (3). |
